Europäisches Patentamt

(19) European Patent Office

Office européen des brevets

(11) Publication number:

**0 295 838**

**A1**

(12) **EUROPEAN PATENT APPLICATION**

(21) Application number: 88305333.2

(22) Date of filing: 10.06.88

(51) Int. Cl.⁴: **B60R 22/10**

(30) Priority: 17.06.87 AU 74409/87
19.12.87 GB 8729670

(43) Date of publication of application:
**21.12.88 Bulletin 88/51**

(84) Designated Contracting States:
**DE ES FR GB IT SE**

(71) Applicant: **BRITAX CHILD-CARE PRODUCTS
PTY. LTD.
99 Derby Road
Sunshine 3020 Victoria(AU)**

Applicant: **Britax Limited**

**Chichester West Sussex P019 2AQ(GB)**

(72) Inventor: **Robson, Edward Phillip
St. Albans Road
Keilor Victoria(AU)**
Inventor: **Cunningham, Douglas James
42 Viking Way Horndean
Portsmouth Hampshire(GB)**

(74) Representative: **Hollinghurst, Antony
Britax Limited Patent Department
Chichester West Sussex PO19 2AQ(GB)**

(54) **Harness adjuster for child's seat.**

㊗ A child's safety seat (10) has a harness includ-
ing a pair of shoulder straps (15 and 16) which are
connected by a common strap (17) to a retractor
(23). The retractor (23) is normally locked to prevent
both protraction and retraction of the common strap
(17) but can be released by depression of a push-
button (43).

Fig.1.

## HARNESS ADJUSTER FOR CHILD'S SEAT

This invention relates to a harness for a child's safety seat, having a harness adjuster for the shoulder straps. Although the invention is particularly applicable to child restraints used in motor vehicles it could be used equally well in any number of child restraints which use a similar harness.

Car child restraints conventionally include a child support structure in the form of a partially wrap around seat, adapted to be placed in the normal adult's seating position of a car and to be secured in that position using the conventional seat belt attachment points, and including a harness for safely securing a child within the seat when in use. Such arrangement has worked very well but has the disadvantage that the harness must be adjusted to suit the individual child and to take into account such things as the amount and thickness of clothing being worn by the child. Further, with some children, there is some difficulty with the child wriggling while the responsible adult holds them in place with one hand while trying to attach the adjusted seat belt with the sole remaining hand.

The present invention provides a child restraint with an automatic tensioning device.

According to the invention, in a self-adjusting child harness adapted to be fixed to a child support structure, where the harness comprises a child restraint strap, a resiliently biassed releasably lockable tensioning device is attached to an end of said strap.

Two embodiments of the invention will now be described, by way of example, with reference to the accompanying drawing in which:

Figure 1 is a perspective view of a child restraining seat including a harness in accordance with the present invention;

Figure 2 shows a tensioning device in accordance with a first embodiment of the present invention in end elevation;

Figure 3 shows the device of Figure 2 in plan view; and

Figure 4 is a cross-sectional view taken on the line 4 - 4 in Figure 3;

Figure 5 is a cross-sectional view a tensioning device in accordance with a second embodiment of the invention;

Figure 6 is a cross-sectional view taken on the line 6 - 6 in Figure 5, showing the line 5 - 5 on which the sectional view of Figure 5 is taken;

Figure 7 is a cross-sectional view of the spindle of the retractor shown in Figures 5 and 6; and

Figure 8 is a side view of the spindle of the retractor shown in Figures 5 and 6, showing the end of a strap about to be connected thereto.

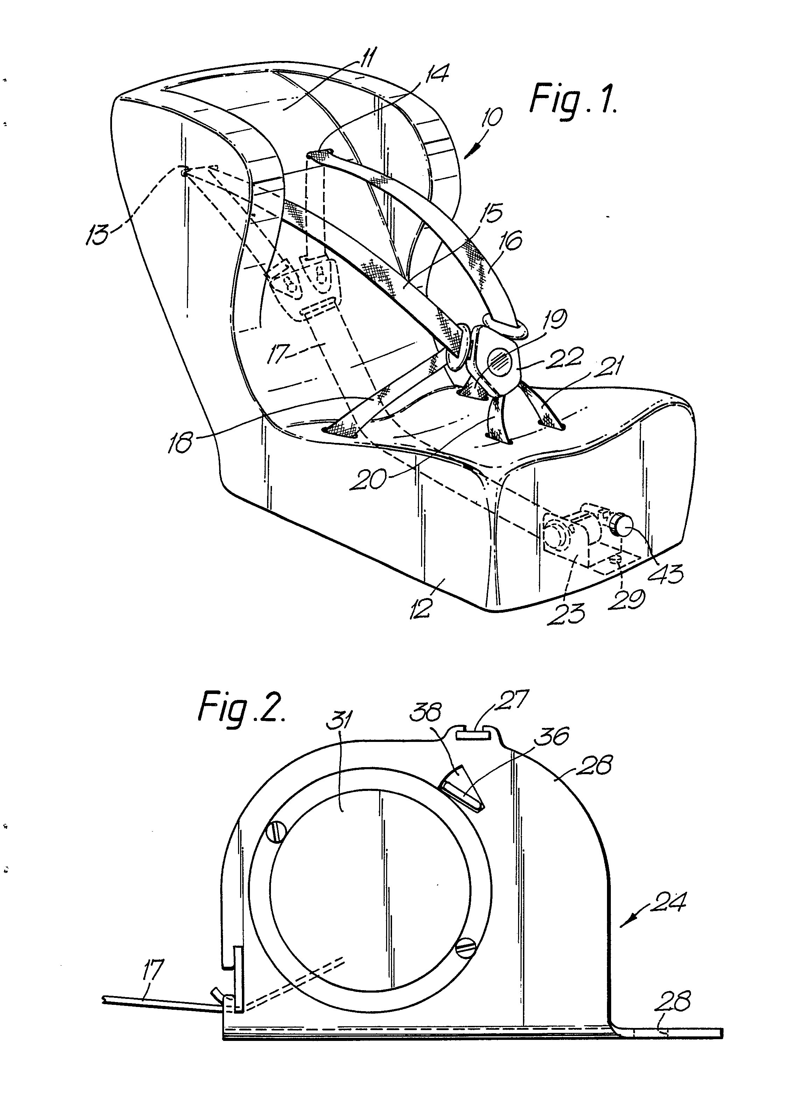

Figure 1 shows a child's seat 10 having a seat back portion 11 and a seat portion 12 formed as an integral moulding. The seat back portion 11 has a pair of apertures 13 and 14 to receive a pair of shoulder belts 15 and 16 which are joined behind the seat back to a common adjusting strap 17, as described in Australian Patent No. 503602. The seat is also provided with a pair of lap straps 18 and 19, a pair of crutch straps 20 and 21, and a buckle 22 for securing the ends of the various straps together.

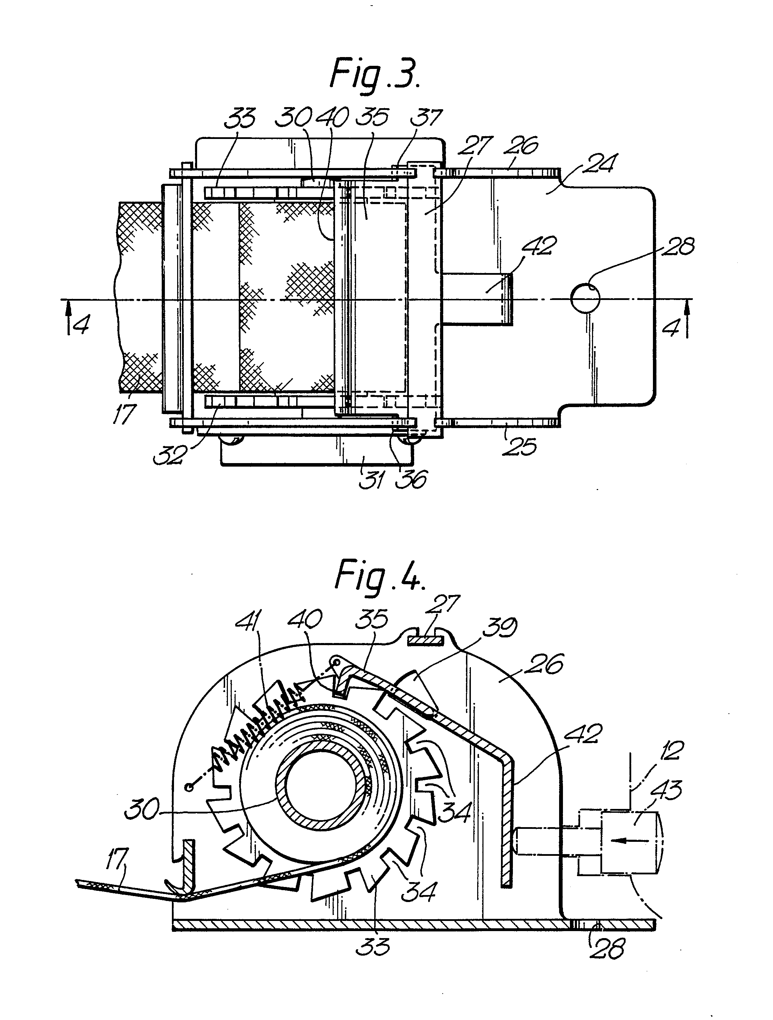

In accordance with the invention, the common adjusting strap 17 is connected to a tensioning device in the form of a retractor 23 mounted on the underneath side of the seat portion 12. As can be seen from Figures 2 to 4, the retractor 23 has a U-shaped frame 24 with side walls 25 and 26 linked by a tie bar 27. A hole 28 in the frame 24 receives a bolt 29 (Figure 1) whereby it is secured to the seat portion 12. A tubular spindle 30 is journaled in holes in the side walls 25 and 26 of the frame 24 so as to project through the side wall 25 into a retraction spring cassette 31 which contains a radial helical spring (not shown) biassing the spindle 30 in the counter-clockwise direction (as viewed in Figure 4) so as to retract the common adjusting strap 17 thereon.

A pair of flanges 32 and 33 are fromed fast with the spindle 30, one on each side of the strap 17. Each of the flanges 32 and 33 carries a seriers of uniformly-spaced rectangular detent slots 34 on its periphery. A pawl 35 is pivotally mounted on the frame 24 by means of a respective lug 36, 37 on each end, each lug 36, 37 engaging in a respective arcuate window 38, 39 in the corresponding side wall 25, 26. The pawl 35 has a pawl tip 40 which is engagable in a selected detent slot 34 in each of the flanges 32 and 33 and is biased into engagement by a tension spring 41 (Figure 4). On the opposite side of the pivot axis formed by the luggs 36 and 37, the pawl 35 has a limb 42 which is engaged by a push-button 43, depression of which causes disengagement of the pawl 35 from the flanges 32 and 33.

In operation, the push-button 43 is depressed and the shoulder straps 15 and 16 are pulled outwardly through the slots 13 and 14 in the seat back 11 (Figure 1) the reel 23 unwinds to protract the common adjusting strap 17. Upon release of the button 43, the pawl 35 is biassed by spring 41 towards the flanges 32 and 33 and at most only a small recoil of the spindle 30 occurs. With the harness in this slack position and the buckle 22 undone, an infant can be placed within the harness, the buckle 22 reattached and the release button 43 again depressed. The depression of the release button 43 causes the disengagement of the pawl 35 and the recoil of the spindle 30 so as to correctly tension the harness. In this regard, the stiffness and preload of the helical spring within the cassette 31 is selected so as not to produce a harsh tensioning of the harness. Once tensioning of the harness is complete release of the button 43 allows the pawl 35 to again interact with the detent 32 and 33 so as to prevent any release of tension in the harness.

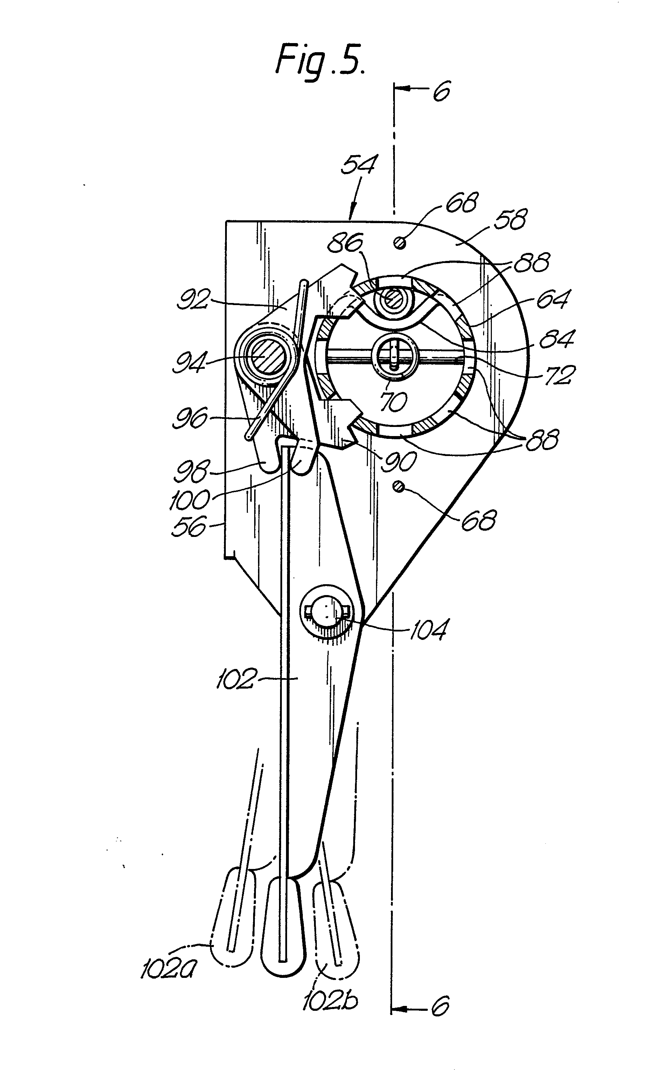

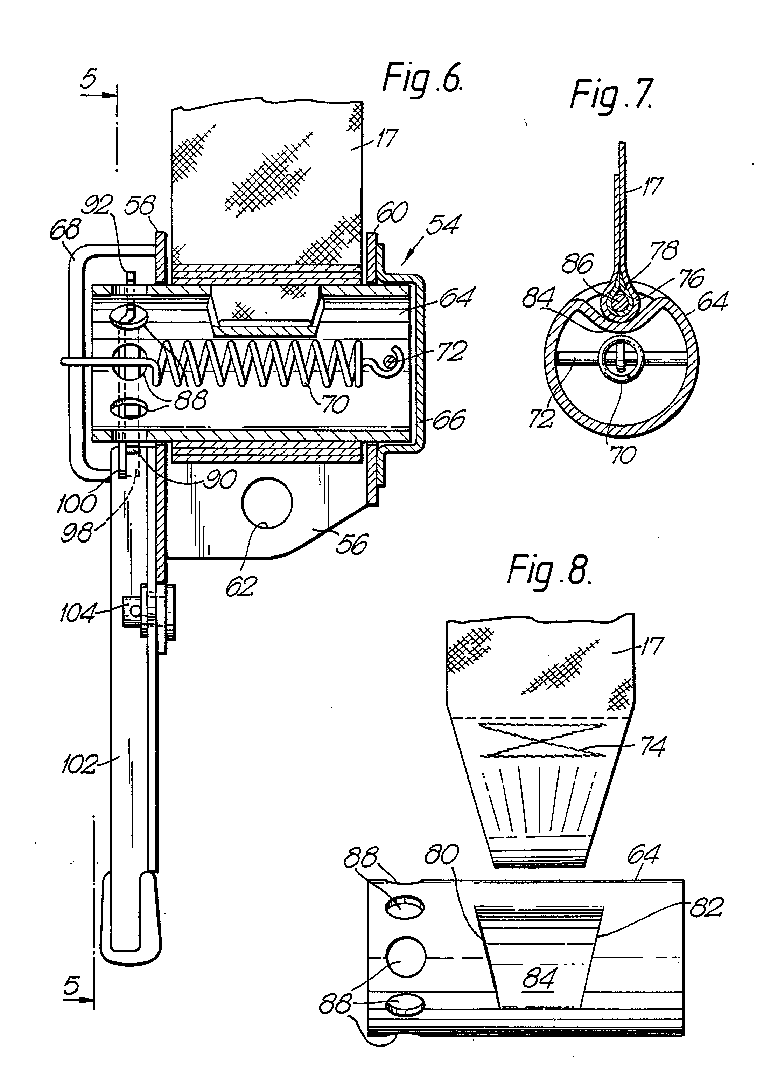

Figures 5 and 6 illustrate a second embodiment of the invention in which the retractor 23 is replaced by a retractor 54 having a U-shaped frame 56 with side walls 58 and 60 and a hole 62 to receive the bolt 29 (Figure 1). A tubular spindle 64 is journaled in holes in the side walls 58 and 60 of the frame 56 so as to project at both ends. A retaining cap 66 on the side wall 60 covers the right-hand end of the spindle 64, as viewed in Figure 6.

A U-shaped bracket 68 is secured to the outer face of the side member 58 of the frame 56 so as to extend diametrically across the end of the spindle 64. A helical spring 70, which is accommodated within the spindle 64 extends between the bracket 68 and a pin 72 which extends diametrically across the part of the spindle 64 which is enclosed within the end cap 66 on the side member 60. The spring 70 is tensioned so as to bias the spindle 64 in the counter-clockwise direction, as viewed in Figure 6.

Referring now to Figures 7 and 8, the end of the common adjusting strap 17 is doubled back and sewn by stitching 74 so as to form a loop 76 round a rigid sleeve member 78 (Figure 7). The spindle 64 has two cuts 80 and 82 extending obliquely around part of its periphery and the trapezium-shaped portion 84 of the spindle 64 therebetween is bent inwardly. The end of the strap 17 surrounding the sleeve member 78 is inserted through the opening formed thereby and a peg 86 is threaded along the inside of the spindle 64 and through the sleeve 78 so as to secure the strap 17 to the spindle 64.

As can best be seen in Figure 6, the part of the spindle 64 which projects through the side wall 58 has eight uniformly circumferentially spaced holes 88 extending therethrough. First and second pawls 90 and 92 are pivotally mounted on a pin 94 which projects from the outer side of the side wall 58 of the frame 54. A spring 96, having its central portion coiled round the pin 94, is arranged to bias the pawl 90 in the counter-clockwise direction, as viewed in Figure 6, and the pawl 92 in the clockwise direction so that both pawls are urged into engagement with the holes 88 in the spindle 64. The first pawl 90 is shaped so as to resist clockwise rotation of the spindle 64, which is the protraction direction for the strap 17, while allowing rotation in the counter-clockwise direction. The second pawl 92 is shaped to resist counter-clockwise rotation of the spindle 64 while allowing clockwise rotation.

The pawls 90 and 92 have respective fingers 98 and 100 which engage on opposite sides of a manually operable release lever 102 which is pivotally mounted on a pin 104 secured to the side wall 58 of the frame 56. Movement of the release lever 102 to the position shown in chain dotted lines at 102a in Figure 6 (upwardly as viewed in Figure 5), disengages the pawl 92 from the spindle 64, thus allowing rotation in the retraction direction while leaving the pawl 90 in a condition to block rotation in the protraction direction. Similarly, displacement of the lever in the opposite direction, to the position 102b (Figure 6) causes disengagement of the first pawl 90, allowing rotation of the spindle 64 in the protraction direction while leaving the pawl 92 in a condition to block rotation in the retraction direction.

In use, when it is desired to extend the effective length of the shoulder straps 13 to enable a child to put on the harness, lifting of the release lever 102 to the position 102a allows the shoulder straps 14 to be pulled out through the slots 13. The pawl 92 prevents the shoulder straps 14 from being pulled back through the slots 13 as soon as they are released, even if the release lever 102 is still raised. When a child is in position in the seat and it is desired to shorten the shoulder straps 14 to take up any slack previously produced, the release lever 102 is pressed downwardly to the position shown at 102b so as to disengage the pawl 90. The spring then retracts the adjusting strap 16, and with it the shoulder straps 14, the pawl 90 continuing to prevent a wriggling child inadvertently pulling out the shoulder straps 14 before the release lever 102 is allowed to return to its central position.

The arrangement illustrated in Figures 7 and 8 may be used to attach the strap 17 to the spindle 30 shown in Figures 2 to 4.

## Claims

1. A self-adjusting child harness adapted to be fixed to a child's support structure, the harness comprising a child restraint strap (17), characterised by a resiliently biased releasably lockable tensioning device (23, 54) attached to an end of said strap (17).

2. A harness according to claim 1, wherein the tensioning device (23, 54) comprises a support structure (24, 56) having a spindle (30, 64) journaled thereon, means for connecting a safety harness strap (17) to the spindle (30, 64), a spring (31, 70) connected between the spindle (30, 64) and the support structure (24, 56) so as to cause rotation of the spindle (30, 64) in a strap retraction direction, a series of detent formations (34, 88) spaced round the periphery of the spindle (30, 64), a pawl (35, 60) resiliently biased into engagement with the detent formations (34, 88) so as to obstruct protraction of the strap (17) from the spindle (30, 64) and manually operable release means (43, 102) for moving the pawl (35, 60) out of engagement with the detent formations (34, 88).

3. A harness according to claim 2, wherein each detent formation comprises a parallel-sided slot (34) in a flange (32, 33) of the spindle (30, 64) and the pawl (35) has a pawl tip (40) arrranged to move into engagement with a selected slot (34) in a direction substantially parallel to the sides thereof so as to obstruct both protraction and retraction of the strap (17).

4. A harness according to claim 1, 2 or 3, wherein the tensioning device (23, 54) is manually releasable by depressing a push-button (43).

5. A harness according to claim 2, wherein the spindle (64) is tubular and the detent formations (88) comprise holes spaced round the periphery of the spindle (64).

6. A harness according to claim 2 or 5, wherein the pawl (60) is arranged to engage with the detent formations (88) so as to obstruct protraction of the strap (17) from the spindle (64) but permit retraction of the strap (17) thereon and a second pawl (60) is arranged to be resiliently biased into engagement with the detent formations (88) so as to obstruct retraction of the strap (17) on to the spindle (64) but permit protraction of the strap (17) therefrom.

7. A harness according to claim 6, wherein the release means (102) comprises a pivotally mounted release lever so arranged that movement of the release lever in one direction causes disengagement of the first pawl (60) and movement of the release lever in a direction opposite to said one direction causes disengagement of the second pawl (60).

8. A harness according to any preceding claim, wherein the means for connecting the strap (17) to the spindle (30, 64) comprises a formation on the tubular spindle (30, 64) made by forming a pair of cuts through part of the periphery of the spindle (30, 64) in planes intersecting the axis thereof and deforming the wall of the spindle (30, 64) between the cuts radially inwardly so as to accommodate a peg in the interior of the spindle (30, 64) passing through the cuts and outside the indented portion of the spindle (30, 64) where it passes through a loop formed in the end of the strap (17).

9. A harness according to any preceding claim, wherein the strap (17) is fast with the shoulder straps (15, 16) of a full harness.

10. An child's seat including a child support structure (11, 12) to which is affixed a child harness according to any preceding claim.

Fig.1.

Fig.2.

EP 0 295 838 A1

# Fig.3.

33 30 40 35 37    27 26    24

42    28

4    4

17

32

31 36

25

# Fig.4.

41 40 35    27    39    26

30    42    12

43

34

17    34

33    28

# Fig.5.

*Fig.6.*

*Fig.7.*

*Fig.8.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 175 194 (THE QUAKER OATS CO.)<br>* Claims 1-5; figures 5,6 * | 1,2 | B 60 R 22/10 |
| A | | 4,10 | |
| | --- | | |
| Y | AU-B- 56 950 (TAKADA)<br>* Page 12, line 13 - page 13, line 12;<br>figures 1-4 * | 1 | |
| A | | 4,10 | |
| | --- | | |
| Y | US-A-3 312 451 (DAVIS)<br>* Claim; figures 1,2 * | 1 | |
| | --- | | |
| A | US-A-4 245 798 (STEGER)<br>* Column 1, line 43 - column 2, line<br>25; figures 1,5 * | 3,4-7 | |
| | --- | | |
| A | CA-A-1 184 482 (SCHWARTZ)<br>* Page 3, line 1 - page 4, line 7;<br>figures 1-3 * | 1 | |
| | ----- | | |

TECHNICAL FIELDS SEARCHED (Int. Cl.4)

B 60 R

The present search report has been drawn up for all claims

| Place of search | Date of completion of the search | Examiner |
|---|---|---|
| THE HAGUE | 21-09-1988 | MAUSSER,T. |